# EUROPEAN PATENT APPLICATION

(11) **EP 4 752 383 A1**
(43) Date of publication of application: **03.06.2026**
(21) Application number: 24216511.6
(22) Date of filing: 29.11.2024
(51) Int. Cl.: F16B 7/18, F16C 11/04, B60G 7/02, B62D 27/06

(54) **BOLT FOR CONNECTING TWO COMPONENTS OF A VEHICLE CHASSIS, CONNECTION AND METHOD FOR ESTABLISHING SUCH A CONNECTION**

(71) Applicant: Volvo Car Corporation, 405 31 Göteborg (SE)
(72) Inventor: WEGLIN, Joakim, 40531 Göteborg (SE); SKAGIUS, Adam, 40531 Göteborg (SE); NORDELL, Magnus, 40531 Göteborg (SE)
(74) Representative: Kransell & Wennborg KB

(57) **Abstract**

The disclosure relates to a bolt (64) for connecting two components of a vehicle chassis. The bolt (64) comprises a bolt shaft (74) and a bolt head (72). The bolt shaft (74) comprises a first fitting portion (86), and a second fitting portion (88). The first fitting portion (86) and the second fitting portion (88) are located at a distance from one another. The distance extends along an axial direction (66) of the bolt shaft (74). Moreover, the disclosure relates to a connection between a first component of a vehicle chassis and a second component of a vehicle chassis. This connection comprises the bolt (64). Furthermore, the disclosure relates to a method for establishing a connection between a first component of a vehicle chassis and a second component of a vehicle chassis using the bolt (64).

## Description

### TECHNICAL FIELD

The present disclosure relates to a bolt for connecting two components of a vehicle chassis. The bolt comprises a bolt shaft and a bolt head.

Moreover, the present disclosure relates to a connection between a first component of a vehicle chassis and a second component of a vehicle chassis.

Furthermore, the present disclosure is directed to a method for establishing a connection between a first component of a vehicle chassis and a second component of a vehicle chassis.

### BACKGROUND ART

Reducing an overall mass of a vehicle may be beneficial in terms of reduced consumption of fuel or electric energy. Moreover, user comfort may be enhanced while driving the vehicle.

One way of reducing the overall mass of the vehicle is to reduce a size of bolts connecting components of a vehicle chassis.

However, even if a smaller bolt, i.e. a bolt of smaller diameter, was able to sustain a sufficient level of loads, there is a problem in that bolts having a smaller diameter may loosen more easily than bolts of a larger diameter due to reduced allowable tightening torques.

### SUMMARY

Hence, there may be a need to provide an improved bolt that exhibits less susceptibility towards loosening than standard bolts.

The problem is at least partially solved or alleviated by the subject matter of the independent claims of the present disclosure, wherein further examples are incorporated in the dependent claims.

According to a first aspect, there is provided a bolt for connecting two components of a vehicle chassis. The bolt comprises a bolt shaft and a bolt head. The bolt shaft comprises a first fitting portion, and a second fitting portion. The first fitting portion and the second fitting portion are located at a distance from one another. The distance extends along an axial direction of the bolt shaft.

The vehicle chassis forms a structure of the vehicle. Therefore, the term "vehicle chassis" refers to a structural backbone of the vehicle comprising, for example, a structural frame, a passenger cabin and wheel suspensions of the vehicle. Thus, two components of the vehicle chassis that are to be connected may particularly refer to a structural frame of the vehicle and a link arm of a wheel suspension of the vehicle. Also, both components that are to be connected may refer to two link arms of a wheel suspension of the vehicle. The bolt shaft is understood as a portion of the bolt that provides mechanical support for the two components to be connected in a radial direction of the bolt. The bolt head is understood as a portion of the bolt that is connected to the bolt shaft and that comprises a larger outer diameter than the bolt shaft. Due to its larger outer diameter, the bolt head provides an axial support for the bolt by abutting against one of the two components to be connected. In an example, the bolt head may comprise a particular profile for a key or tool to engage with and hold, i.e. prevent the bolt from turning using the key. Examples of such a key or tool may comprise a wrench, a nut, an Allen key or a torx key. In another example, the bolt does not comprise such a profile for a key or tool.

A fitting portion is a portion of the bolt shaft that is configured to tightly fit into a through hole of at least one of the two components to be connected. In this context, the fitting portion is configured to bear loads acting on the bolt in a radial direction. Moreover, the fitting portion may be specifically dimensioned and toleranced such that it forms a desired fit when arranged in the associated through hole, e.g. a press fit, a loose fit or an intermediate fit. In an example, the fitting portion is a portion of the bolt shaft that tightly fits into the through hole of a first one of the two components to be connected and into a through hole of a second one of the two components to be connected. The fitting portion tightly fitting into a respective through hole means that the fitting portion may partially extend along an axial extension of the respective through hole. It may also mean that the fitting portion extends exactly along the entire axial extension of the respective through hole. Moreover, it may mean that the fitting portion extends further than the axial extension of the respective through hole. In simplified words, the axial extension of the respective through hole may also be referred to as a depth of the respective through hole. The fitting portion tightly fitting into a respective through hole further may mean that the fitting portion and/or the component comprising the respective through hole is elastically deformed in the radial direction when the bolt is fitted into the respective through hole. It may also involve that the fitting portion and/or the component comprising the respective through hole is plastically deformed in the radial direction when the bolt is fitted into the respective through hole. Due to compressive forces acting between a fitting portion on the bolt shaft and the through hole of the respective component that the respective fitting portion contacts, a susceptibility of the bolt to loosen is reduced.

The bolt according to the present disclosure comprises a first fitting portion and a second fitting portion, i.e. two fitting portions. Since the bolt comprises two fitting portions, the susceptibility of the bolt to loosen it even further reduced. The two fitting portions being arranged at an axial distance from each other particularly enable a first link arm of a wheel suspension to be reliably attached to a clevis on the structural frame of the vehicle or to a second link arm by using the bolt. In this particular example, the first fitting portion may tightly fit into a through hole in a first arm of the clevis or second link arm and the second fitting portion may tightly fit into a through hole in a second arm of the clevis or second link arm. Still in this particular example, the first fitting portion and the second fitting portion may fit into a through hole in the first link arm. Altogether, using the above-described bolt, a connection between the two components of the vehicle chassis can be realized using a comparatively small bolt while maintaining a low level of susceptibility of the connection towards loosening. This way, an overall weight of the vehicle can be reduced.

In an example, the first fitting portion comprises a serration and/or the second fitting portion comprises a serration. A serration is understood as a plurality of indents on an outer surface of a fitting portion. This has the effect that a contact area between the respective fitting portion and a through hole in the component contacted by the fitting portion is reduced. In other words, the respective fitting portion comprises protruding surface elements on its outer surface that are created between any two indents. Protruding surface elements cause a higher local deformation of the respective fitting portion and/or of the through hole in the contacted component than a sole press fit of even surfaces. This results in stronger frictional interaction between a fitting portion and a through hole of the contacted component which may rely on both elastic and plastic deformation. In an example, the serration of the first fitting portion and/or the serration of the second fitting portion leads to an elastic and/or plastic deformation of the associated fitting portion and/or the through hole in which the fitting portion is arranged such that the bolt is rotationally locked in the through hole. In other words, the serration may form an anti-rotation mechanism. This is useful, if the bolt shall interact with a nut or another rotatory element. In such a case, the anti-rotation mechanism may avoid or reduce undesired relative rotations between the bolt and the nut or other rotatory element.

In an example, some or all of the indents may be oriented in parallel to each other. In this example, the indents may form grooves extending along an axial direction of the bolt. Additionally or alternatively, some of the indents may be oriented at an angle to other ones of the indents. Thus, a crossed pattern of indents may be created on the outer surface of a fitting portion. Some or all of the indents may be located at even distances towards each other measured along a circumference of the respective fitting portion. Additionally or alternatively, some or all of the indents may be located at an even distance towards each other measured along the axial direction of the bolt shaft. Thus, a regular pattern of indents may be created on the outer surface of a fitting portion. Some or all of the indents may be oriented at an angle to the axial direction of the bolt shaft. Particularly, some or all of the indents may be oriented perpendicularly to the axial direction of the bolt shaft. Having some or all of the indents oriented at an angle to the axial direction of the bolt shaft impedes a movement of the bolt in the axial direction of the bolt shaft once a connection between the two components is established by the bolt. Thus, a loosening of the connection is obstructed. Additionally or alternatively, some or all of the indents may be oriented in parallel to the axial direction of the bolt shaft. Having some or all of the indents oriented in parallel to the axial direction of the bolt shaft makes the bolt easily mountable to the first component and to the second component of the two components to be connected. This is because once a local deformation in a through hole of a respective component is created by a protruding surface element between any two indents of a fitting portion, the bolt can be further inserted into the through hole without creating additional deformations in the through hole of the respective component. In other words, a mountability of the bolt into through holes of the first component and/or second component of the two components to be connected is facilitated. However, having some or all of the indents oriented in parallel to the axial direction of the bolt shaft may block an undesired rotation of the bolt as has been explained before.

In an example, the first fitting portion is located closer to the bolt head than the second fitting portion. An outer diameter of the first fitting portion is larger than an outer diameter of the second fitting portion. In a case in which a fitting portion comprises a serration, the outer diameter is understood as a furthest distance between pointed surface elements on the outer surface of a fitting portion in the radial direction of the bolt. If the bolt is inserted into a first through hole such that the first fitting portion contacts the first through hole and into a second through hole such that the second fitting portion contacts the second hole, a diameter of the first through hole may be designed to be larger than the diameter of the second through hole. This in combination with the outer diameter of the first fitting portion being larger than the outer diameter of the second fitting portion allows the bolt to be pushed through the first through hole without the second fitting portion contacting and/or deforming the first hole. This requires less pushing force than if the second fitting portion contacted the first through hole. Additionally, the first through hole does not get plastically deformed by the second fitting portion. Due to this, the first fitting portion may tightly fit into the undeformed first through hole. Thus, a substantial compressive force acting between the first fitting portion and the first through hole may be created, which reduces a susceptibility of the bolt to loosen. If the bolt is pushed further through the first through hole, the first fitting portion may contact the first through hole and the second fitting portion may contact the second through hole. In this case, the second fitting portion does not get plastically deformed by the first through hole either. Thus, a substantial compressive force acting between the second fitting portion and the second hole may be created, which reduces a susceptibility of the bolt to loosen.

According to another example, the second fitting portion is located closer to the bolt head than the first fitting portion. In this example, an outer diameter of the second fitting portion is larger than an outer diameter of the first fitting portion. The same effects as explained above in the case of the first fitting portion being located closer to the bolt head also apply here, of course, noting that the denominations of first fitting portion and second fitting portion are swapped in this alternative.

According to still another example, an outer diameter of the first fitting portion equals an outer diameter of the second fitting portion. For this alternative, it will be considered that it is the first fitting portion that is located adjacent to the bolt head. In this alternative, manufacturing of the bolt is eased since only one outer diameter instead of two outer diameters needs to be provided for both the first fitting portion and the second fitting portion. It is noted that in this alternative, a compressive force between the first fitting portion and the first through hole is still created because although the first through hole may get plastically deformed by the second fitting portion when pushed through the first through hole, a plastic deformation always involves some degree of elastic deformation. The elastic deformation of the first through hole when interacting with the first fitting portion is, in this alternative, substantially the same as when interacting with the second fitting portion if the outer diameters of the first fitting portion and the second fitting portion are the same. A compressive force acting, in a tightened state of the bolt, between a fitting portion and its contacted through hole reduces a susceptibility of the bolt to get loose.

In an example, the bolt shaft comprises a threaded portion. The threaded portion is arranged adjacent to an end of the bolt shaft which is located opposite to the bolt head. The threaded portion is configured to receive a nut that may be used for tightening and/or securing the bolt. In particular, the threaded portion and, thus, the nut may be used to at least partially pull at least one fitting portion of the bolt shaft into a position such that the at least one fitting portion contacts at least one through hole in one of the two components to be connected. Pulling the bolt through the at least one through hole by tightening the nut is an easy to realize and efficient way of inserting the bolt having fitting portions into the at least one through hole. Especially, it is requires less effort than applying excessive pushing force onto the bolt, e.g. by a hammer, to insert the bolt into the at least one through hole.

In an example, the threaded portion is arranged directly adjacent to the first fitting portion or to the second fitting portion. Thus, both of the first fitting portion and the second fitting portion may be separated from the end of the bolt opposite to the bolt head by the threaded portion. This has the effect that the nut can be applied to the bolt without interacting with any of the fitting portions or without any of the fitting portions damaging a thread within the nut. By screwing the nut onto the threaded portion of the bolt, the bolt may be tightened by creating a compression force in the axial direction of the bolt shaft between the nut and the bolt head.

In an example, the threaded portion is sized M5 to M20. Using a threaded portion of such a size range, a sufficient level of compression force between the nut and the bolt head can be created. Additionally or alternatively, the bolt may be reliably secured in the associated through holes. In particular, the bolt can be pulled through the first hole and the second hole by tightening the nut. Tightening the nut on a treaded portion of said size range is an efficient way of creating a sufficient level of pulling force that pulls the bolt through a through hole of any one of the two components to be connected, thereby deforming the respective through hole by either one of the fitting portions. Therefore, it is not necessary to apply an excessive pushing force to the bolt via the bolt head, e.g. by a hammer, when either one of the fitting portions is supposed to deform a through hole in any one of the two components to be connected.

In an example, the bolt shaft comprises an intermediate portion arranged in between the first fitting portion and the second fitting portion. The intermediate portion may extend along the entire distance that the first fitting portion and the second fitting portion are located from each other. The first fitting portion may be located closer to the bolt head than the intermediate portion. An outer diameter of the first fitting portion may be larger than an outer diameter of the intermediate portion or may equal an outer diameter of the intermediate portion. The outer diameter of the first fitting portion being larger than the outer diameter of the intermediate portion ensures an easy mountability of the bolt to the two components to be connected. This is because if the intermediate portion of the bolt is pushed through a through hole of one of the two components to be connected, it does not get deformed by the intermediate portion. Due to this, no elevated pushing force or pulling force needs to be applied to the bolt for pushing the intermediate portion through the respective through hole. If the first fitting portion is pushed into the through hole, the outer diameter of the first fitting portion interacts with the inner diameter of the yet undeformed through hole such that compressive forces are created between the first fitting portion and the through hole. Due to these compressive forces, a loosening of the bolt can be prevented. The outer diameter of the first fitting portion being equal to the outer diameter of the intermediate portion requires an elevated pushing force or pulling force to be applied to the bolt for pushing the intermediate portion through the through hole. However, when the bolt loosens, not only a compressive force acting between the first fitting portion and the second fitting portion and the respective through holes in the two components to be connected but also a compressive force acting between the intermediate portion and at least one through hole of the two components to be connected resists the loosening.

According to another example, the second fitting portion may be located closer to the bolt head than the intermediate portion. In this alternative, an outer diameter of the second fitting portion may be larger than an outer diameter of the intermediate portion or equals an outer diameter of the intermediate portion. It is understood that the same explanations and effects explained in this paragraph relating to the first fitting portion being located closer to the bolt head than the intermediate portion also apply here, of course, noting that the denominations of first fitting portion and second fitting portion are swapped in this alternative.

In an example, the first fitting portion or the second fitting portion is arranged directly adjacent to the bolt head. In other words, there is no gap and/or intermediate portion between the first fitting portion or the second fitting portion and the bolt head. This has the effect that when the bolt is fully tightened and the bolt head abuts against one of the two components to be connected, the first fitting portion or the second fitting portion may interact with a through hole in the one of the two components to be connected along its entire axial extension, in other words along its whole depth. This creates a particularly strong interaction between the first fitting portion or the second fitting portion and the through hole in the one of the two components. Thus, a loosening of the bolt is further impeded.

According to a second aspect, there is provided a connection between a first component of a vehicle chassis and a second component of a vehicle chassis. The connection comprises:
- the first component, wherein the first component comprises a first through hole and a second through hole, wherein the first through hole and the second through hole are arranged coaxially,
- the second component, wherein the second component comprises a third through hole and a fourth through hole, wherein the third through hole and the fourth through hole are arranged coaxially, and
- the bolt according to the first aspect.
The bolt extends through the first through hole, through the second through hole, through the third through hole, and through the fourth through hole. The first fitting portion is fitted inside the first through hole and the third through hole and the second fitting portion is fitted inside the second through hole and the fourth through hole.

It is understood that the third through hole and the fourth through hole may be created as portions of a single through hole extending through the second component. A fitting portion fitting into a respective through hole means that the fitting portion and/or the component comprising the respective through hole is elastically deformed in the radial direction when the bolt is fitted into the respective through hole with one of its fitting portions. It may also comprise that the fitting portion and/or the component comprising the respective hole is plastically deformed in the radial direction when the bolt is fitted into the respective through hole with one of its fitting portions. Due to compressive forces acting between the fitting portions of the bolt shaft and the respective component that the respective fitting portion contacts, a susceptibility of the bolt to loosen is reduced. Thus, also a susceptibility of the connection between the first component of the vehicle chassis and the second component of the vehicle chassis to loosen is reduced. Since the bolt comprises two fitting portions, a susceptibility of the bolt to loosen is even further reduced. Thus, also a susceptibility of the connection between the first component of the vehicle chassis and the second component of the vehicle chassis to loosen is even further reduced. Altogether, the connection between the first component of the vehicle chassis and the second component of the vehicle chassis can be realized using a comparatively small bolt while maintaining a low level of susceptibility of the connection towards loosening. This way, an overall weight of the vehicle can be reduced.

In an example, the bolt is secured inside the first through hole, the second through hole, the third through hole and the fourth through hole by a nut. In other words, using the nut, the bolt is blocked from moving out of the first through hole, the second through hole, the third through hole and the fourth through hole. Moreover, using a nut, a sufficient level of compression force between the nut and the bolt head can be created. In particular, the bolt can be pulled through the first through hole, the second through hole, the third through hole and through the fourth through hole by tightening the nut. Tightening the nut is an efficient way of creating a sufficient level of pulling force that pulls the bolt through a through hole of any one of the first components and the second component, thereby deforming the respective through hole by either one of the fitting portions. Therefore, it is not necessary to apply an excessive pushing force to the bolt via the bolt head, e.g. by a hammer, when either one of the fitting portions deforms a through hole in any one of the first component and the second component.

In an example, the first fitting portion is rotationally fixed with respect to the first through hole and the third through hole and/or wherein the second fitting portion is rotationally fixed with respect to the second through hole and the fourth through hole. This means that the first fitting portion, i.e. the bolt, cannot rotate around its axial direction relative to the first through hole and relative to the third through hole. This also implies that the first through hole and the third through hole, i.e. the first component and the second component, cannot rotate relative to each other around the axial direction of the bolt. Additionally or alternatively, this means that the second fitting portion, i.e. the bolt, cannot rotate around its axial direction relative to the second through hole and relative to the fourth through hole. This also implies that the second through hole and the fourth through hole, i.e. the first component and the second component, cannot rotate relative to each other around the axial direction of the bolt. The rotational fixation between the first fitting portion, the first through hole and the third through hole and/or the rotational fixation between the second fitting portion, the second through hole and the fourth through hole may be created by a tight fit, e.g. press fit, between the respective fitting portion and the respective through hole. Additionally, said rotational fixation may be provided or enhanced by a serration comprised on an outer surface of the first fitting portion and/or on an outer surface of the second fitting portion. This has the effect that a susceptibility of the connection between the first component of the vehicle chassis and the second component of the vehicle chassis to loosen is further reduced.

In an example, one of the first component and the second component is fork-shaped. The first through hole or the third through hole is located in a first arm of the fork-shaped component and the second through hole or the fourth through hole is located in a second arm of the fork-shaped component. The first arm and the second arm are located at a distance from each other that is equal to or greater than a distance that the first fitting portion and the second fitting portion of the bolt are located apart from each other. Thus, by inserting the bolt into the through hole located in the first arm and into the through hole located in the second arm of the first component or of the second component, a statically defined radial support of the bolt shaft is provided. Consequently, also the axial direction of the bolt shaft is well-defined in 3D-space. The first component or the second component being fork-shaped has the further effect that the respective other component may be placed between the through holes located in the first arm and in the second arm of the fork-shaped component, i.e. between the first arm and the second arm. In particular, the through holes located in the other component may be placed between the through holes located in the first arm and the second arm of the fork-shaped component in a coaxial manner. By placing the other component in the described manner, the other component may be connected to the fork-shaped component by inserting the bolt into the first through hole, the second through hole, the third through hole and the fourth through hole.

In an example, one of the first component and the second component is a bushing. It is understood that the component that is a bushing cannot be fork-shaped at the same time. The first through hole and the second through hole or the third through hole and the fourth through hole are formed as portions of an elongated through hole extending through the bushing. The elongated through hole extending through the bushing corresponds to the single through hole explained above. In an example, the bushing may be an inner bushing connected to a ringshaped rubber bearing. Using the rubber bearing, the inner bushing is elastically connected to an outer bushing. In an example, a link arm of a wheel suspension may be rigidly attached to the outer bushing of the rubber bearing. Thus, using the above-described connection between a first component of a vehicle chassis and a second component of a vehicle chassis, a link arm of a wheel suspension may be connected to a structural frame of the vehicle or to another link arm in a manner that exhibits a low susceptibility of loosening.

According to a third aspect, there is provided a method for establishing a connection between a first component of a vehicle chassis and a second component of a vehicle chassis. The method comprises:
arranging a bolt according to the first aspect in a first through hole of the first component, in a second through hole of the first component, in a third through hole of the second component and in a fourth through hole of the second component, and
fitting the first fitting portion inside the first through hole and inside the third through hole and fitting the second fitting portion inside the second through hole and inside the fourth through hole during arranging the bolt.

It is understood that arranging the bolt in the associated through holes, i.e. the first through hole, the second through hole and the fourth through hole, and fitting the first fitting portion inside the first through hole and inside the third through hole and fitting the second fitting portion inside the second through hole and inside the fourth through hole may happen at the same time. It is further understood that the third through hole and the fourth through hole may be created by a single through boring through the second component. A fitting portion fitting into a respective through hole means that the fitting portion and/or the component comprising the respective through hole is elastically deformed in the radial direction when the bolt is fitted into the respective through hole with its fitting portion. It may also comprise that the fitting portion and/or the component comprising the respective through hole is plastically deformed in the radial direction when the bolt is fitted into the respective through hole with its fitting portion. Due to compressive forces acting between the fitting portions of the bolt shaft and the respective component that the respective fitting portion contacts, a susceptibility of the bolt to loosen is reduced. Thus, also a susceptibility of the connection between the first component of the vehicle chassis and the second component of the vehicle chassis to loosen is reduced. Since the bolt comprises two fitting portions, the susceptibility of the bolt to loosen it even further reduced. Thus, also a susceptibility of the connection between the first component of the vehicle chassis and the second component of the vehicle chassis to loosen is even further reduced. Altogether, the method has the effect that the connection between the first component of the vehicle chassis and the second component of the vehicle chassis can be realized using a comparatively small bolt while maintaining a low level of susceptibility of the connection towards loosening. This way, an overall weight of the vehicle can be reduced.

It should be noted that the above examples may be combined with each other irrespective of the aspect involved. Accordingly, the method may be combined with structural features of the bolt and/or of the connection and, likewise, the bolt and the connection may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a connection according to the present disclosure between a first component of a vehicle chassis and a second component of a vehicle chassis,
- Figure 2: shows a schematic view of a wheel suspension of the vehicle of Figure 1 comprising a connection according to the present disclosure between a first component of a vehicle chassis and a second component of a vehicle chassis,
- Figure 3: shows a lower a link arm of the wheel suspension of Figure 2 in a separate view,
- Figure 4: shows a detailed view of segment I of the wheel suspension of Figure 2,
- Figure 5: shows a sectional view of the wheel suspension along a plane A-A in Figure 4,
- Figure 6: shows a schematic view of a first variant of a bolt according to the present disclosure for connecting two components of a vehicle chassis,
- Figure 7: shows a schematic view of a second variant of a bolt according to the present disclosure for connecting two components of a vehicle chassis,
- Figure 8: shows a schematic view of a third variant of a bolt according to the present disclosure for connecting two components of a vehicle chassis,
- Figure 9: shows a schematic view of a fourth variant of a bolt according to the present disclosure for connecting two components of a vehicle chassis,
- Figure 10: shows a detailed view of segment II of the bolt of Figures 6 to 9, and
- Figure 11: illustrates steps of a method according to the present disclosure for establishing a connection between a first component of a vehicle chassis and a second component of a vehicle chassis.

### DETAILED DESCRIPTION

The Figures are merely schematic representations and serve only to illustrate examples of the disclosure. Identical or equivalent elements are in principle provided with the same reference signs.

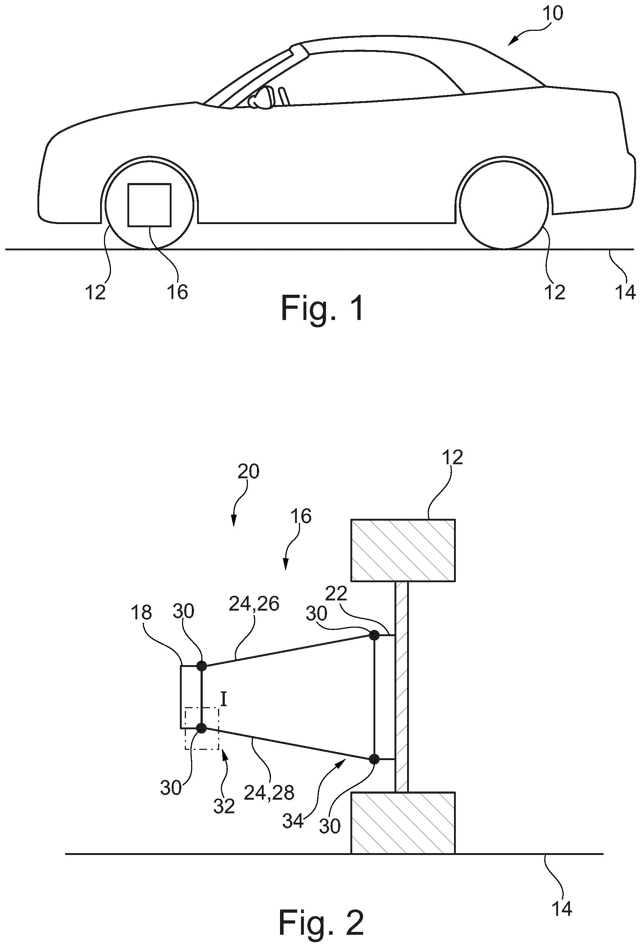

Figure 1 shows a vehicle 10.

The vehicle 10 comprises four road wheels 12 contacting a surface of a road 14 on which the vehicle 10 is traveling. It is noted that only two of the four road wheels 12 of the vehicle 10 are visible.

The vehicle also comprises four wheel suspension systems 16. Each of the four road wheels 12 is suspended on a structural frame 18 of the vehicle 10 by a wheel suspension system 16.

The structural frame 18 of the vehicle 10 and the wheel suspension systems 16 may also be referred to as a vehicle chassis 20.

A schematic view of one of the wheel suspension systems 16 is provided in Figure 2.

The figure shows a road wheel 12 of the vehicle 10, in more detail a wheel bearing element 22, being attached to the structural frame 18 of the vehicle 10 by two link arms 24 of the wheel suspension system 16.

The upper link arm 24, 26 of the wheel suspension system 16 shown in Figure 2 is a shaped as an elongated rod.

The lower link arm 24, 28 of the wheel suspension system 16 shown in Figure 2 is Y-shaped.

Thus, there are five connection points 30 shown between the structural frame 18 of the vehicle 10 and the wheel bearing element 22 of the wheel suspension system 16. Three of the connection points 30 connect link arms 24 of the wheel suspension system 16 to the structural frame 18 of the vehicle 10. Two of the connection points 30 connect link arms 24 of the wheel suspension system 16 to the wheel bearing element 22 of the wheel suspension system 16.

Of course, a position and an orientation of the road wheel 12 is not statically defined by the two shown connection points 30 at the wheel bearing element 22. To make the position and orientation of the road wheel 12 statically defined, it is understood that at least a third connection point 30 needs to be provided at the wheel bearing element 22 that connects the wheel bearing element 22 to a further link arm 24 and/or a steering rod for steering the road wheel 12. However, such further link arm 24 or steering rod is not shown in Figure 2.

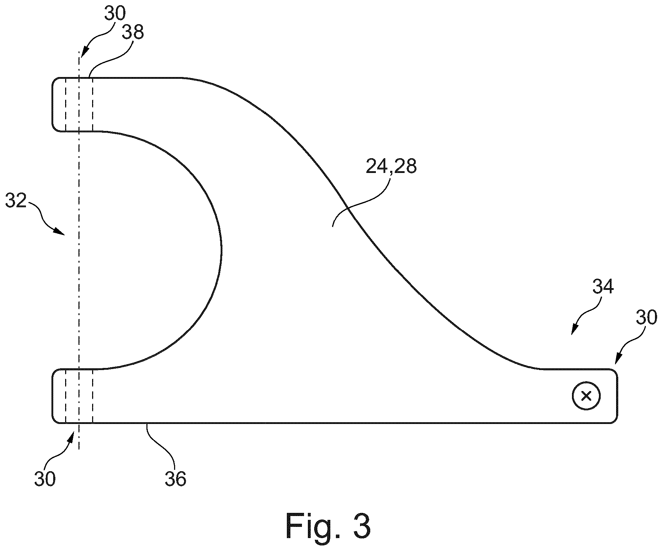

Figure 3 shows a detailed view of the lower link arm 24, 28 of the wheel suspension system 16 of Figure 2.

It can be observed that the lower link arm 24, 28 is Y-shaped. This means that the lower link arm 24, 28 comprises two connection points 30 at a first end 32 and one connection point 30 at a second end 34.

In other words, the Y-shaped lower link arm 24, 28 comprises a first arm 36 and a second arm 38 at its first end 32. The first arm 36 and the second arm 38 each comprise a through hole for connecting the Y-shaped lower link arm 24, 28 to the structural frame 18 of the vehicle 10.

At the second end 34, the Y-shaped lower link arm 24, 28 comprises one through hole for connecting the Y-shaped lower link arm 24, 28 to the wheel bearing element 22.

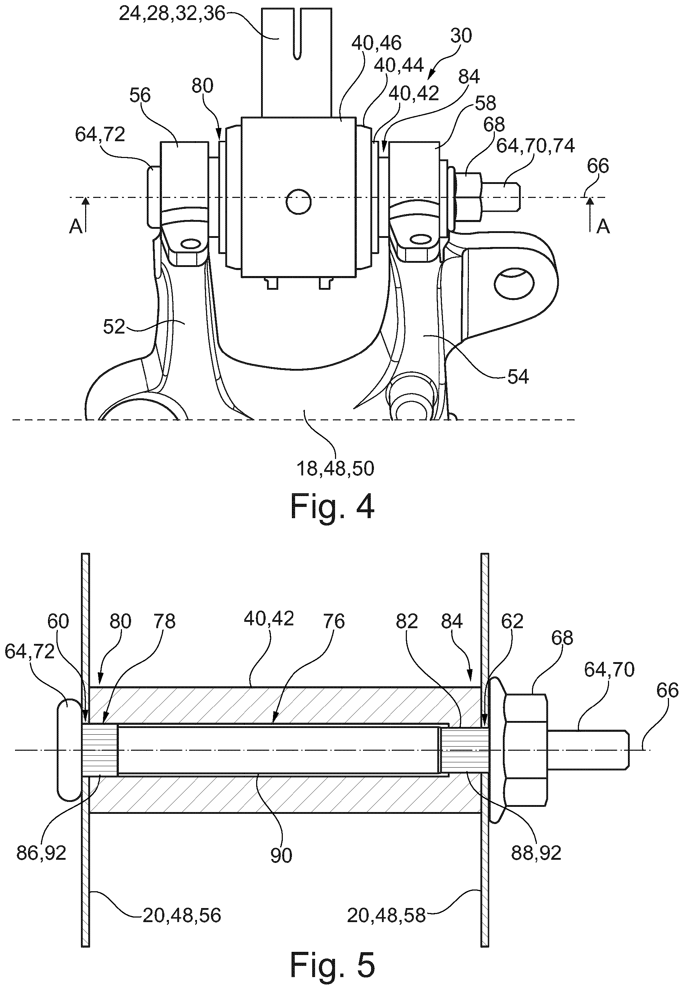

In Figure 4, a detailed view of the connection point 30 of the Y-shaped lower link arm 24, 28 at the first arm 36 of its first end 32 is provided. The connection point 30 of the Y-shaped lower link arm 24, 28 at the first arm 36 of the first end 32 is indicated as detail I in Figure 2.

Said connection point 30 comprises a rubber bearing 40.

The rubber bearing 40 comprises an inner bushing 42, a rubber body 44 and an outer bushing 46.

The rubber body 44 is radially interposed between the inner bushing 42 and the outer bushing 46. Furthermore, the rubber body 44 provides an elastic connection between the inner bushing 42 and the outer bushing 46. The elastic connection may deform elastically in all spatial directions and around all rotational axes. This means that the rubber body 44 in particular allows for a relative movement of the inner bushing 42 with respect to the outer bushing 46 in an axial direction, a radial direction and a circumferential direction. All relative movements are rendered possible by a deformation of the rubber body 44.

The first arm 36 of the first end 32 of the Y-shaped lower link arm 24, 28 is fixedly connected to the outer bushing 46 of the rubber bearing 40.

Said connection point 30 further comprises a clevis 48 that forms part of the structural frame 18 of the vehicle 10. The clevis 48 may also be referred to as a fork-shaped component of the structural frame 18 of the vehicle 10.

The clevis 48 comprises a base portion 50 having a first arm 52 and a second arm 54. A first clamp 56 is attached to the first arm 52 of the base portion 50 and a second clamp 58 is attached to the second arm 54 of the base portion 50.

Thus, the first arm 52 of the base portion 50 in combination with the first clamp 56 forms a first through hole 60 of the clevis 48. The second arm 54 of the base portion 50 in combination with the second clamp 58 forms a second through hole 62 of the clevis 48.

Said connection point 30 further comprises a bolt 64.

The bolt 64 is suspended on the clevis 48 by the clamps 56, 58 attached to the base portion 50. In other words, the bolt 64 extends through the first through hole 60 and through the second through hole 62 of the clevis 48. This implies that an axial direction 66 of the bolt 64 is coaxial to an axial direction 66 of the first through hole 60 and of the second through hole 62.

The inner bushing 42 of the rubber bearing 40 is provided in between the first arm 52 and the second arm 54 of the clevis 48 such that an axial direction 66 of a through hole extending through the inner bushing 42 coincides with the axial direction 66 of the bolt 64 and with the axial direction 66 of the first through hole 60 and of the second through hole 62. In other words, the inner bushing 42 of the rubber bearing 40, the bolt 64 as well as the first through hole 60 and the second through hole 62 of the clevis 48 share a common middle axis.

The bolt 64 is tightened by a nut 68 that is screwed onto a threaded portion 70 of the bolt 64. The threaded portion 70 is provided at an end of the bolt that is opposite the end of the bolt 64 that comprises a bolt head 72. In the present example, the threaded portion 70 comprises a metric thread sized M12.

Thus, the bolt 64 is fixated or secured by a compression force acting in the axial direction 66 of the bolt 64 between the nut 68 and the bolt head 72 via the clevis 48.

It is understood that such compression force translates into a tension force acting in the axial direction 66 of the bolt 64 between the nut 68 and the bolt head 72 via a bolt shaft 74 of the bolt 64.

Figure 5 shows a schematic sectional view of the connection point 30 of Figure 4 along a sectional plane A-A. It is emphasized that the sectional view shown in Figure 5 is schematic. Thus, the view of Figure 5 is not to scale and also the dimensions of the components do not exactly correspond to the dimensions of the components shown in Figure 4. However, the connection principle of the connection point 30 shown in the sectional view of Figure 5 is still the same as the connection principle of the connection point 30 shown in detail in Figure 4.

Figure 5 shows that the inner bushing 42 of the rubber bearing 40 comprises an elongated through hole 76 as axial through boring.

An inner diameter of the elongated through hole 76 comprises two different inner diameters. A third through hole 78 at a first end 80 of the inner bushing 42 comprises a larger inner diameter than a fourth through hole 82 at a second end 84 of the inner bushing 42.

From Figure 5, it can further be observed that the bolt 64 comprises a first fitting portion 86 on the outer surface of the bolt shaft 74. The first fitting portion 86 is directly adjacent to the bolt head 72 of the bolt 64.

Moreover, the bolt 64 further comprises a second fitting portion 88 on the outer surface of the bolt shaft 74. The second fitting portion 88 is directly adjacent to the threaded portion 70 of the bolt 64.

An intermediate portion 90 on the bolt shaft 74 is interposed between the first fitting portion 86 and the second fitting portion 88. Also, the intermediate portion 90 is directly adjacent to the first fitting portion 86 and directly adjacent to the second fitting portion 88.

Thus, the first fitting portion 86 and the second fitting portion 88 are located at a distance from each other, wherein the distance extends along the axial direction 66 of the bolt shaft 74.

The first fitting portion 86 is fitted into the first through hole 60 of the clevis 48. Moreover, the first fitting portion 86 is fitted into the third through hole 78 of the inner bushing 42 of the rubber bearing 40.

The second fitting portion 88 is fitted into the second through hole 62 of the clevis 48. Moreover, the second fitting portion 88 is fitted into the fourth through hole 82 of the inner bushing 42 of the rubber bearing 40.

In this context, fitted means that, in a "not inserted"-state, an outer diameter of the respective fitting portion 86, 88 is slightly larger than an inner diameter of the respective through hole 60, 62, 78, 82. Thus, when the respective fitting portion 86, 88 is inserted into the respective through hole 60, 62, 78, 82, a compressive force acts in a radial direction onto the respective fitting portion 86, 88 and onto the respective through hole 60, 62, 78, 82. Due to this, the respective fitting portion 86, 88 and the respective through hole 60, 62, 78, 82 at least elastically deform in the radial direction. The respective fitting portion 86, 88 and the respective through hole 60, 62, 78, 82 may also plastically deform in the radial direction, thereby creating an even stronger fit.

In other words, the first fitting portion 86 is press-fitted into the first through hole 60 of the clevis 48 and into the third through hole 78 of the inner bushing 42. The second fitting portion 88 is press-fitted into the second through hole 62 of the clevis 48 and into the fourth through hole 80 of the inner bushing 42.

The first fitting portion 86 and the second fitting portion 88 each comprise a serration 92. A serration 92 is understood as a plurality of indents in the outer surface of a fitting portion 86, 88.

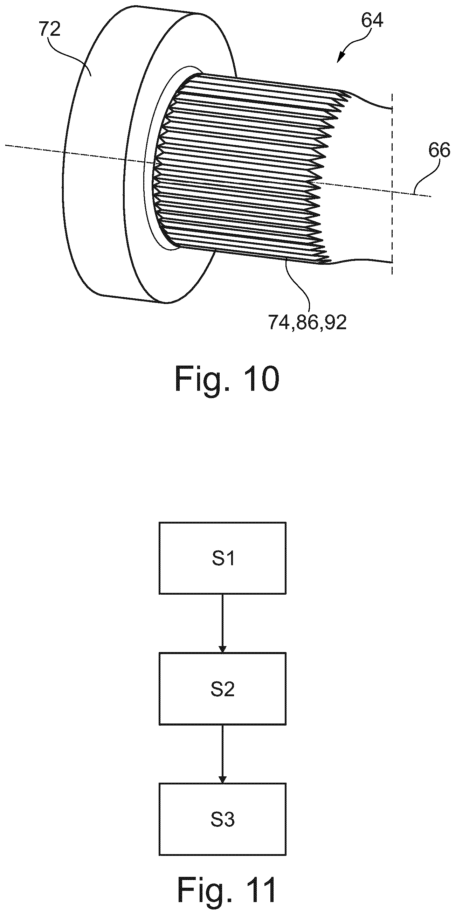

An example of a serrated fitting portion 86, 88 is provided in Figure 10, which shows a serrated first fitting portion 86 being directly adjacent to the bolt head 72.

From Figure 10, it can be observed that the serration comprises elongated protruding surface elements equally distributed around a circumference of the first fitting portion 86. The elongated protruding surface elements are all oriented in parallel to the axial direction 66 of the bolt shaft 74. Thus, the elongated protruding surface elements are all oriented in parallel to each other.

In simplified words, due to the serration 92 of the first fitting portion 86, a cross-section of the first fitting portion 86 of the bolt 64 shown in Figure 10 perpendicular to the axial direction 66 of the bolt shaft 74 is star-shaped.

Coming back to Figure 5, a strong frictional interaction between the first fitting portion 86 and the first through hole 60 of the clevis 48 as well as between the first fitting portion 86 and the third through hole 78 of the inner bushing 42 of the rubber bearing 40 is increased due to the serration 92 of the first fitting portion 86. This is because the protruding surface elements on the outer surface of the first fitting portion 86 protrude into an inner surface of the first through hole 60 and into an inner surface of the third through hole 78.

The increased frictional interaction is so strong that the bolt 64 is rotationally fixed to the first arm 52 of the clevis 48 and rotationally fixed to the inner bushing 42 of the rubber bearing 40. Due to this, also the first arm 52 of the clevis 48 and the inner bushing 42 of the rubber bearing 40 are rotationally fixed to each other.

Of course, the increased frictional interaction also causes the first arm 52 of the clevis 48 and the inner bushing 42 of the rubber bearing 40 to be fixed to the bolt 64 in the axial direction 66 of the bolt shaft 74.

Due to the serration 92 of the second fitting portion 88, a strong frictional interaction between the second fitting portion 88 and the second through hole 62 of the clevis 48 as well as between the second fitting portion 88 and the fourth through hole 82 of the inner bushing 42 of the rubber bearing 40 is increased. This is because the protruding surface elements on the outer surface of the second fitting portion 88 protrude into an inner surface of the second through hole 62 and into an inner surface of the fourth through hole 82.

The increased frictional interaction is so strong that the bolt 64 is a rotationally fixed to the second arm 54 of the clevis 48 and rotationally fixed to the inner bushing 42 of the rubber bearing 40. Due to this, also the second arm 54 of the clevis 48 and the inner bushing 42 of the rubber bearing 40 are rotationally fixed to each other.

Of course, increased frictional interaction also causes the second arm 54 of the clevis 48 and the inner bushing 42 of the rubber bearing 40 to be fixed to the bolt 64 in the axial direction 66 of the bolt shaft 74.

As a general consequence of the increased frictional interaction between the bolt 64 and the clevis 48 as well as between the bolt 64 and the inner bushing 42 of the rubber bearing 40, a susceptibility of the bolt 64 and/or the connection point 30 to loosen under the effect of loosening forces and/or loosening torques is massively decreased.

Thus, a comparatively small bolt 64 having a comparatively small diameter of the bolt shaft 74 and/or a comparatively small size of the threaded portion 70 on the bolt shaft 74 may be used. This results in a reduced weight of the wheel suspension system 16 and, thus, in a reduced overall weight of the vehicle 10.

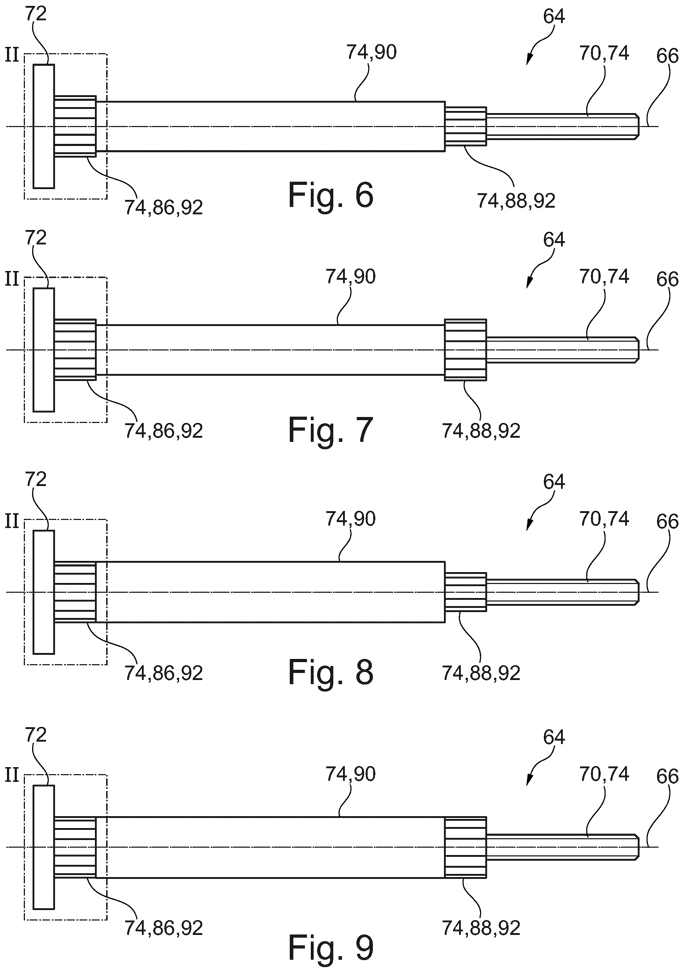

Figure 6 schematically shows the bolt 64 of Figure 5 in a separate view.

An outer diameter of the first fitting portion 86 is larger than an outer diameter of the intermediate portion 90.

Further, an outer diameter of the intermediate portion 90 is larger than an outer diameter of the second fitting portion 88. This implies that also the outer diameter of the first fitting portion 86 is larger than the outer diameter of the second fitting portion 88.

Moreover, an outer diameter of the threaded portion 70, i.e. the size of the threaded portion 70, is smaller than the outer diameter of the second fitting portion 88.

It is noted that the outer diameter of a serrated fitting portion 86, 88 is to be understood as a furthest distance of pointed surface elements on the serrated fitting portion 86, 88 in the radial direction of the bolt 64, i.e. perpendicular to the axial direction 66 of the bolt shaft 74.

A further variant of the bolt 64 is shown in Figure 7. Only the differences with respect to the first variant of the bolt 64 will be explained in the following.

The outer diameter of the first fitting portion 86 and the outer diameter of the second fitting portion 88 are equal.

Further, the outer diameter of the intermediate portion 90 is smaller than the outer diameters of the first fitting portion 86 and of the second fitting portion 88.

Another variant of the bolt 64 is shown in Figure 8. Again, only the differences with respect to the first variant of the bolt 64 will be explained in the following.

The outer diameter of the first fitting portion 86 is equal to the outer diameter of the intermediate portion 90.

Still a further variant of the bolt 64 is shown in Figure 9. Again, only the differences with respect to the first variant of the bolt 64 will be explained in the following.

The outer diameters of the first fitting portion 86, of the intermediate portion 90 and of the second fitting portion 88 are equal.

Figure 10 illustrates steps of a method for establishing a connection between a first component of a vehicle chassis 20 and a second component of a vehicle chassis 20. In the present example, the first component of the vehicle chassis 20 is the clevis 48 of the structural frame 18 of the vehicle 10 and the second component of the vehicle chassis 20 is the Y-shaped lower link arm 24, 28 of the wheel suspension system 16, more precisely, the inner bushing 42 of the rubber bearing 40 connecting the structural frame 18 and the Y-shaped lower link arm 24, 28.

In the following, two alternatives of the method will be described.

In a first alternative explained at the example of the detailed view of the connection point 30 provided in Figure 4, the inner bushing 42 of the rubber bearing 40 is fitted onto the bolt 64, for example by forcing the bolt into place, e.g. by pushing or hammering the bolt 64 into the inner bushing 42 of the rubber bearing 40.

In more detail, the bolt 64 is arranged in the third through hole 78 and in the fourth through hole 82 of the inner bushing 42 of the rubber bearing 40 (S 1). The first fitting portion 86 of the bolt 64 is fitted with the third through hole 78 (S2). The second fitting portion 88 of the bolt 64 is fitted with the fourth through hole 82 (S3).

As a result, an assembly of the bolt 64 and the rubber bearing 40 is created.

The assembly of the bolt 64 and the rubber bearing 40 is then arranged on the first arm 52 and on the second arm 54 of the clevis 48.

After that, the first clamp 56 is attached to the first arm 52 of the clevis 48 and the second clamp 58 is attached to the second arm 54 of the clevis 48, thereby securing the assembly to the clevis 48 in the radial direction of the bolt 64.

In doing so, the bolt 64 is arranged in the first through hole 60 and in the second through hole 62 of the clevis 48 (S 1). The first fitting portion 86 of the bolt 64 is fitted with the first through hole 60 of the clevis 48 (S2). Also, the second fitting portion 88 of the bolt 64 is fitted with the second through hole 62 of the clevis 48 (S3).

At the end of the first alternative of the method, the nut 68 is screwed onto the threaded portion 70 of the bolt 64 and tightened.

In a second alternative also explained at the example of the detailed view of the connection point 30 provided in Figure 4, the first clamp 56 is attached to the first arm 52 of the clevis 48 and the second clamp 58 is attached to the second arm 54 of the clevis 48. Thus, the first through hole 60 and the second through hole 62 of the clevis 48 are created.

After that, the rubber bearing 40, in more detail the inner bushing 42 of the rubber bearing 40, is placed in between the first through hole 60 and the second through hole 62 such that the inner bushing 42, the first through hole 60 and the second through hole 62 share a common middle axis.

Subsequently, the bolt 64 is inserted into the first through hole 60 of the clevis 48, into the third through hole 78 of the inner bushing 42, into the fourth through hole 82 of the inner bushing 42 and into the second through hole 62 of the clevis 48 such that the threaded portion 70 of the bolt 64 sticks at least partially out of the second through hole 62 of the clevis 48 on a side opposite the first through hole 60 (S 1). However, the first fitting portion 86 and the second fitting portion 88 are not fitted to the respective through holes 60, 62, 78, 82, yet.

Thereafter, the nut 68 is screwed onto the threaded portion 70 of the bolt 64 sticking out of the second through hole 62 and tightened. In doing so, the bolt 64 is pulled further through the first through hole 60, through the third through hole 78, through the fourth through hole 82 and through the second through hole 62. As a result, the first fitting portion 86 is fitted with the first through hole 60 of the clevis 48 and with the third through hole 78 of the inner bushing 42 of the rubber bearing 40 (S2). Also, the second fitting portion 88 is fitted with the second through hole 62 of the clevis 48 and with the fourth through hole 82 of the inner bushing 42 of the rubber bearing 40 (S3).

The method of the second alternative allows to achieve a particularly tight fit between the fitting portions 86, 88 and their respective through holes 60, 62, 78, 82 because a high pulling force can be exercised onto the bolt 64 by tightening the nut 68. Using a high pulling force for pulling the bolt 64 through the through holes 60, 62, 78, 82 in a direction such that the bolt head 72 abuts against the first arm 52 of the clevis 48 enables creating a high elastic and/or plastic deformation of the fitting portions 86, 88 and/or of the through holes 60, 62, 78, 82 that the fitting portions 86, 88 are in contact with.

This causes the bolt 64 and, consequently, also the connection between the clevis 48 of the structural frame 18 of the vehicle 10 and the link arm 24, 26, 28 of the wheel suspension system 16 to exhibit less susceptibility towards loosening than a standard bolt 64 without the two fitting portions 86, 88 and/or a connection between said components using the standard bolt 64.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: road wheel
- 14: road
- 16: wheel suspension system
- 18: structural frame
- 20: vehicle chassis
- 22: wheel bearing element
- 24: link arm
- 26: upper link arm
- 28: lower link arm
- 30: connection point
- 32: first end of lower link arm
- 34: second end of lower link arm
- 36: first arm at first end of lower link arm
- 38: second arm at first end of lower link arm
- 40: rubber bearing
- 42: inner bushing
- 44: rubber body
- 46: outer bushing
- 48: clevis
- 50: base portion
- 52: first arm of clevis
- 54: second arm of clevis
- 56: first clamp
- 58: second clamp
- 60: first through hole
- 62: second through hole
- 64: bolt
- 66: axial direction
- 68: nut
- 70: threaded portion
- 72: bolt head
- 74: bolt shaft
- 76: elongated through hole
- 78: third through hole
- 80: first end of inner bushing
- 82: fourth through hole
- 84: second end of inner bushing
- 86: first fitting portion
- 88: second fitting portion
- 90: intermediate portion
- 92: serration

## Claims

1. A bolt (64) for connecting two components of a vehicle chassis (20), the bolt (64) comprising a bolt shaft (74) and a bolt head (72),
wherein the bolt shaft (74) comprises a first fitting portion (86), and a second fitting portion (88),
wherein the first fitting portion (86) and the second fitting portion (88) are located at a distance from one another, wherein the distance extends along an axial direction (66) of the bolt shaft (74).

2. The bolt (64) according to claim 1, wherein the first fitting portion (86) comprises a serration (92) and/or wherein the second fitting portion (88) comprises a serration (92).

3. The bolt (64) according to any of the preceding claims,
wherein the first fitting portion (86) is located closer to the bolt head (72) than the second fitting portion (88) and wherein an outer diameter of the first fitting portion (86) is larger than an outer diameter of the second fitting portion (88), or
wherein the second fitting portion (88) is located closer to the bolt head (72) than the first fitting portion (86) and wherein an outer diameter of the second fitting portion (88) is larger than an outer diameter of the first fitting portion (86), or
wherein an outer diameter of the first fitting portion (86) equals an outer diameter of the second fitting portion (88).

4. The bolt (64) according to any one of the preceding claims, wherein the bolt shaft (74) comprises a threaded portion (70), and wherein the threaded portion (70) is arranged adjacent to an end of the bolt shaft (74) which is located opposite to the bolt head (72).

5. The bolt (64) according to claim 4, wherein the threaded portion (70) is arranged directly adjacent to the first fitting portion (86) or to the second fitting portion (88).

6. The bolt (64) according to claim 4 or 5, wherein the threaded portion (70) is sized M5 to M20.

7. The bolt (64) according to any one of the preceding claims, wherein the bolt shaft (74) comprises an intermediate portion (90) arranged in between the first fitting portion (86) and the second fitting portion (88)
wherein the first fitting portion (86) is located closer to the bolt head (72) than the intermediate portion (90) and wherein an outer diameter of the first fitting portion (86) is larger than an outer diameter of the intermediate portion (90) or equals an outer diameter of the intermediate portion (90), or
wherein the second fitting portion (88) is located closer to the bolt head (72) than the intermediate portion (90) and wherein an outer diameter of the second fitting portion (88) is larger than an outer diameter of the intermediate portion (90) or equals an outer diameter of the intermediate portion (90).

8. The bolt (64) according to any one of the preceding claims, wherein the first fitting portion (86) or the second fitting portion (88) is arranged directly adjacent to the bolt head (72).

9. A connection between a first component of a vehicle chassis (20) and a second component of a vehicle chassis (20), the connection comprising:
- the first component, wherein the first component comprises a first through hole (60) and a second through hole (62), wherein the first through hole (60) and the second through hole (62) are arranged coaxially,
- the second component, wherein the second component comprises a third through hole (78) and a fourth through hole (82), wherein the third through hole (78) and the fourth through hole (82) are arranged coaxially, and
- the bolt (64) according to any one of the preceding claims,
wherein the bolt (64) extends through the first through hole (60), through the second through hole (62), through the third through hole (78), and through the fourth through hole (82),
wherein the first fitting portion (86) is fitted inside the first through hole (60) and the third through hole (78) and wherein the second fitting portion (88) is fitted inside the second through hole (62) and the fourth through hole (82).

10. The connection of claim 9, wherein the bolt (64) is secured inside the first through hole (60), the second through hole (62), the third through hole (78) and the fourth through hole (82) by a nut (68).

11. The connection of claim 9 or 10, wherein the first fitting portion (86) is rotationally fixed with respect to the first through hole (60) and the third through hole (78) and/or wherein the second fitting portion (88) is rotationally fixed with respect to the second through hole (62) and the fourth through hole (82).

12. The connection of any one of claims 9 to 11, wherein one of the first component and the second component is fork-shaped and wherein the first through hole (60) or the third through hole (78) is located in a first arm (52) of the fork-shaped component and wherein the second through hole (62) or the fourth through hole (82) is located in a second arm (54) of the fork-shaped component.

13. The connection of any one of claims 9 to 12, wherein one of the first component and the second component is a bushing (42), wherein the first through hole (60) and the second through hole (62) or the third through hole (78) and the fourth through hole (82) are formed as portions of an elongated through hole (76) extending through the bushing (42).

14. A method for establishing a connection between a first component of a vehicle chassis (20) and a second component of a vehicle chassis (20), the method comprising:
arranging a bolt (64) according to any one of claims 1 to 8 in a first through hole (60) of the first component, in a second through hole (62) of the first component, in a third through hole (78) of the second component and in a fourth through hole (82) of the second component (S 1), and
fitting the first fitting portion (86) inside the first through hole (60) and inside the third through hole (78) (S2) and fitting the second fitting portion (88) inside the second through hole (62) and inside the fourth through hole (82) during arranging the bolt (64) (S3).
